# EUROPÄISCHE PATENTSCHRIFT

(11) **EP 3 249 342 B1**
(45) Veröffentlichungstag und Bekanntmachung des Hinweises auf die Patenterteilung: **12.01.2022**
(21) Anmeldenummer: 17000892.4
(22) Anmeldetag: 24.05.2017
(51) Int. Cl.: F28G 1/16, F28G 3/16, F28G 15/00, F28G 15/04, F23G 5/46, F23L 1/02, F23L 15/04, F23N 3/00

(54) **LUFTVORWÄRMEINRICHTUNG, INSBESONDERE FÜR EINE MÜLLVERBRENNUNGSANLAGE, MÜLLVERBRENNUNGSANLAGE, VERFAHREN ZUM REINIGEN EINER LUFTVORWÄRMEINRICHTUNG SOWIE VERFAHREN ZUM BETRIEB EINER MÜLLVERBRENNUNGSANLAGE**
AIR PRE-HEATER, IN PARTICULAR FOR A REFUSE INCINERATOR, REFUSE INCINERATOR, METHOD FOR CLEANING AN AIR PRE-HEATER AND METHOD FOR OPERATING A REFUSE INCINERATOR
DISPOSITIF DE PRÉCHAUFFAGE D'AIR, EN PARTICULIER POUR UN INCINÉRATEUR DE DÉCHETS, INCINÉRATEUR DE DÉCHETS, PROCÉDÉ DE NETTOYAGE D'UN DISPOSITIF DE PRÉCHAUFFAGE D'AIR ET PROCÉDÉ DE FONCTIONNEMENT D'UN INCINÉRATEUR DE DÉCHETS

(30) Priorität: 27.05.2016 DE 102016006497
(43) Veröffentlichungstag der Anmeldung: 29.11.2017
(73) Patentinhaber: Balcke-Dürr GmbH, 40472 Düsseldorf (DE)
(72) Erfinder: Leidig, Olaf, 40472 Düsseldorf (DE)
(74) Vertreter: Heidler, Philipp

(56) Entgegenhaltungen:
- EP-A1- 2 784 388
- DE-A1- 3 537 945
- US-A1- 2011 005 706
- US-A1- 2015 345 878
- US-A1- 2016 025 486

## Beschreibung

Die Erfindung betrifft eine Luftvorwärmeinrichtung, insbesondere für eine Müllverbrennungsanlage, eine Müllverbrennungsanlage, ein Verfahren zum Reinigen einer Luftvorwärmeinrichtung sowie ein Verfahren zum Betrieb einer Müllverbrennungsanlage.

Beim Betrieb und der Aufrechterhaltung von industriellen Verbrennungsprozessen, wie sie beispielsweise bei solchen Kraftwerken Verwendung finden, die fossile Energieträger als Energiequelle nutzen, zu den vorliegend auch Müllverbrennungsanlagen gezählt werden, ist es bekannt, die dem Verbrennungsprozess zugeführte Verbrennungsluft (Primärluft), beispielsweise unter Nutzung von Restenergien, vorzuwärmen. Hierdurch kann die Effizienz des Kraftwerks erheblich erhöht werden. Insbesondere bei Verbrennungsanlagen kann diese aufgeheizte Verbrennungsluft zudem dazu genutzt werden, den zu verfeuernden Müll vorzutrocknen, um auf diese Weise den Verbrennungsprozess ebenfalls zu optimieren. Solche Luftvorwärmeinrichtungen werden auch als Luftvorwärmer (LUVO) bezeichnet. Wesentliche Elemente einer gattungsgemäßen Luftvorwärmeinrichtung sind ein Kaltlufteinlass, ein Warmluftauslass und ein einen Wärmetauscherraum umgebendes Gehäuse, durch das die zu erwärmende Luft (Verbrennungsluft) vom Kaltlufteinlass zum Warmluftauslass geführt wird. In dem Wärmetauscherraum ist ein Rohrbündel mit einer Vielzahl von Wärmetauscherrohren angeordnet, die über einen Eingangssammler kommend bis hin zu einem Ausgangssammler von einem Wärme abgebenden Medium, insbesondere Dampf, durchströmt werden. Der Wärmeaustausch findet somit zwischen dem Wärme abgebenden Medium und der zu erwärmenden Luft statt. Typische Temperaturen, auf die die Verbrennungsluft vorgewärmt wird, liegen beispielsweise im Bereich von ca. 120-160 °C.

Häufig werden über die Verbrennungsluft Verunreinigungen, wie beispielsweise Staub, in die Luftvorwärmeinrichtung eingebracht. Diese Verunreinigungen setzen sich mit der Zeit auf den Wärmetauscherrohren ab und können erhebliche Effizienzminderungen der Luftvorwärmeinrichtung auslösen. Es ist daher üblich, Wartungsintervalle bei den entsprechenden Kraftwerken, insbesondere Müllverbrennungsanlagen, zur Reinigung der Luftvorwärmeinrichtung vorzusehen. Dies geschieht in der Regel manuell durch entsprechendes Abbürsten oder ähnliches der Wärmetauscherrohre. Während dieser Wartungsintervalle wird der Betrieb des Kraftwerks unterbrochen oder es muss eine redundante Luftvorwärmeinrichtung vorhanden sein. Diese Ausfallzeiten oder der zusätzliche apparative Aufwand sind mit erheblichen Mehrkosten und/oder Gewinnsverlusten verbunden.

Insbesondere beim Betrieb von Luftvorwärmeinrichtung von Müllverbrennungsanlagen treten die vorstehend genannten Effekte auf. Die aufgewärmte Verbrennungsluft wird hier insbesondere auch zur Vortrocknung des zu verfeuernden Mülls genutzt. Das vermehrte Verschmutzen der Luftvorwärmeinrichtung ist unter anderem auf gesetzliche Vorschriften zurückzuführen, wonach zur Verminderung von Geruchsemissionen ein bestimmter Luftaustausch innerhalb des Müllbunkers pro Zeiteinheit vorgesehen ist. Üblicherweise wird daher die erforderliche Verbrennungsluft über den Müllbunker kommend angesaugt, der Luftvorwärmeinrichtung zugeführt und anschließend in den Verbrennungsraum geleitet. Durch das Ansaugen der Verbrennungsluft/Primärluft über den Müllbunker ist die angesaugte Verbrennungsluft zum Teil stark staubbelastet und die vorstehend genannten Ablagerungen in der Luftvorwärmeinrichtung treten besonders drastisch auf. Der Einsatz entsprechender Filter hat sich hier nicht bewährt.

Die Aufgabe der Erfindung ist es somit, eine Möglichkeit anzugeben, verschmutzungsbedingte Wartungsintervalle für eine gattungsgemäße Luftvorwärmeinrichtung zu verhindern oder zumindest zu verkürzen.

Die Lösung der Aufgabe gelingt mit einer Luftvorwärmeinrichtung, insbesondere für eine Müllverbrennungsanlage, einer Müllverbrennungsanlage, einem Verfahren zum Reinigen einer Luftvorwärmeinrichtung sowie einem Verfahren zum Betrieb einer Müllverbrennungsanlage gemäß den unabhängigen Ansprüchen. Bevorzugte Weiterbildungen sind in den abhängigen Ansprüchen angegeben.

Ein wesentlicher Grundgedanke der Erfindung liegt darin, die Luftvorwärmeinrichtung mit einer Druckluftreinigungseinrichtung auszustatten. Eine solche Luftvorwärmeinrichtung mit den Merkmalen des Oberbegriffs des Anspruchs 1 ist aus der US 2011/0005706 A1 bekannt. Konkret ist es vorgesehen, zur Abreinigung von an den Wärmetauscherrohren anhaftenden Verunreinigungen in der Luftvorwärmeinrichtung und insbesondere innerhalb des Wärmetauscherraums, eine Druckluftreinigungseinrichtung anzuordnen, die einen Druckluftanschluss für den Anschluss an eine Druckluftversorgung, einen sich in den Innenraum bzw. Wärmetauscherraum erstreckenden Versorgungsbalken und wenigstens einen am Versorgungsbalken innerhalb des Innenraums bzw. des Wärmetauscherraums angeordneten Druckluftauslass aufweist. Die Druckluftreinigungseinrichtung ist somit Teil der Luftvorwärmeinrichtung und zumindest teilweise fest in der Luftvorwärmeinrichtung installiert. Mithilfe der Druckluftreinigungseinrichtung kann über den wenigstens einen Druckluftauslass ein Luftimpuls erzeugt werden, mit dem an den Wärmetauscherrohren anhaftende Verunreinigungen, insbesondere Staubpartikel, von diesen abgeblasen werden können. Über den Druckluftanschluss wird die entsprechende Druckluft in die Druckluftreinigungseinrichtung eingebracht. Die Druckluftversorgung kann beispielsweise ein Kompressor sein, an den der Druckluftanschluss angeschlossen ist. Selbstverständlich könne hiervon auch entsprechende Versorgungsleitungen mit umfasst sein. Vom Druckluftanschluss bis hin zum Druckluftauslass am Versorgungsbalken liegt eine entsprechende Verbindung vor, sodass die Druckluft aus der Druckluftreinigungseinrichtung über den Druckluftauslass austreten kann. Der Versorgungsbalken bezeichnet im Wesentlichen ein, auch mehrteiliges, Bauteil, das zumindest teilweise in den Innenraum des Wärmetauscherraums hineinragt und wenigstens einen und vorzugsweise mehrere Druckluftauslässe in dem in den Wärmetauscherraum hineinragenden Teil trägt. Über den Versorgungsbalken gelingt es somit beispielsweise, Druckluftauslässe an solche Stellen innerhalb des Wärmetauscherrohres zu positionieren, von denen aus eine besonders effiziente Reinigung der Wärmetauscherrohren möglich ist. Dies wird nachstehend noch näher erläutert. Mithilfe der Anordnung der Druckluftreinigungseinrichtung in die Luftvorwärmeinrichtung ist es im Umfang der Erfindung vorgesehen, während des Betriebs der Luftvorwärmeinrichtung, d.h. während diese durch die Verbrennungsluft und auch durch das Wärme abgebende Medium durchströmt wird, entsprechende Reinigungsimpulse zu erzeugen und die Wärmetauscherrohre von anhaftenden Verunreinigungen zu befreien. Ein Abschalten weder der Luftvorwärmeinrichtung noch einer übergeordneten Kraftwerkseinheit ist für diesen Reinigungsschritt nicht erforderlich.

Für einen zuverlässigen Verbrennungsprozess ist es vorteilhaft, wenn die Primärluftversorgung über die Luftvorwärmeinrichtung verhältnismäßig konstant gehalten wird und insbesondere nicht durch den Betrieb und Nichtbetrieb der Druckluftreinigungseinrichtung schwankt. Dabei ist zu berücksichtigen, dass die im Betrieb der Luftvorwärmeinrichtung ausgebrachte Reinigungsluft erfindungsgemäß selbst Teil der der Feuerung zugeführten Primärluft bzw. Verbrennungsluft ist und am Warmluftauslass einen Anteil am Volumenstrom Primärluft von insbesondere auch größer 10% ausmachen kann. Um aufgrund der zumindest diskontinuierlich während des Betriebs der Luftvorwärmeinrichtung erfolgenden Inbetriebnahme der Druckluftreinigungseinrichtung auftretende Schwankungen in der über die Luftvorwärmeinrichtung erfolgenden Primärluftversorgung zu eliminieren oder zumindest deutlich zu reduzieren, ist es vorgesehen, dass die Luftvorwärmeinrichtung eine Regeleinheit aufweist, die derart ausgebildet ist, dass sie die Primärluftzufuhr der Luftvorwärmeinrichtung in Abhängigkeit vom Betrieb der Druckluftreinigungseinrichtung regelt. Die Regelung erfolgt dabei erfindungsgemäß derart, dass die Summe der Volumenströme der dem Luftvorwärmer über den Kaltlufteinlass zugeführten Primärluft und der über die Druckluftreinigungseinrichtung in den Wärmetauscherraum ausgeblasenen Luft zumindest im Wesentlichen konstant ist, um letztlich eine gleichmäßige Primärluftversorgung einer der Luftvorwärmeinrichtung nachgeschalteten Feuerung bzw. einen gleichmäßigen Primärluftstrom am Warmluftauslass zu ermöglichen. Mit anderen Worten wird über die Regeleinheit erreicht, dass der über den Warmluftauslass austretende Volumenstrom der angewärmten Primärluft unabhängig vom Betriebszustand der Druckluftreinigungseinrichtung zumindest annähernd, d.h. insbesondere im Bereich von maximal +/- 5% und ganz besonders im Bereich von maximal +/- 3% bezogen auf einen durchschnittlichen Volumenstrom, konstant gehalten wird. Mit anderen Worten wirken sich somit der Betriebszustand der Druckluftreinigungseinrichtung und dessen Änderungen auf die Primärluftversorgung am Kaltlufteinlass der Luftvorwärmeinrichtung aus, was durch die Regeleinheit erreicht wird. Konkret kann die Regeleinheit dazu beispielsweise ein geregeltes Ansauggebläse bzw. eine geeignete Gebläseeinheit regeln, über das/die die Primärluft angesaugt und anschließend dem Kaltlufteinlass zugeführt wird. Wird somit beispielsweise die Druckluftreinigungseinrichtung aktiviert, regelt die Regeleinheit den Volumenstrom der der Luftvorwärmeinrichtung über den Kaltlufteinlass zugeführten Primärluft beispielsweise durch entsprechende Ansteuerung der Gebläseeinheit herunter und umgekehrt. Damit kompensiert die Regeleinheit die der Luftvorwärmeinrichtung über die Druckluftreinigungseinrichtung zugeführte Luftmenge und ermöglicht trotz eines intervallartigen Betriebs der Druckluftreinigungseinrichtung eine im Wesentlichen konstante Verbrennungsluftversorgung einer der Luftvorwärmeinrichtung nachgeschalteten Feuerung. Dies ermöglicht insgesamt einen besonders effizienten und kontinuierlichen Betrieb des Dampferzeugers insgesamt und damit der Dampfproduktion.

Dabei wird die Druckluftreinigungseinrichtung ferner bevorzugt derart abgestimmt und im Reinigungsbetrieb betrieben, dass der durch ihren Volllastbetrieb eingebrachte Luftanteil an aus dem Luftvorwärmer ausströmenden Warmluftvolumenstrom Primärluft im Bereich bis maximal 10% und insbesondere im Bereich bis maximal 20% liegt und gleichzeitig im Bereich von wenigstens 5% und insbesondere wenigstens 7% liegt. Dann treten die Vorteile der Erfindung besonders deutlich hervor.

Die Regeleinheit umfasst in einer beispielhaften konkreten Umsetzung beispielsweise einen in geeigneter Weise programmierten Regelungr und zudem Informationsverbindungen, beispielsweise Datenverbindungen, zu wenigstens einem geeigneter Sensor, über den die Regeleinheit Informationen darüber enthält, ob der über den Kaltlufteinlass einströmende Primärluftvolumenstrom erhöht oder gesenkt werden muss. Dies kann im einfachsten Fall ein Betriebssensor der Druckluftreinigungseinrichtung sein, der Informationen darüber liefert, ob die Druckluftreinigungseinrichtung aktiviert oder deaktiviert ist. Ergänzend oder alternativ können auch ein oder mehrere Volumenstromsensoren und/oder Drucksensoren vorhanden sein, insbesondere eingangsseitig zum Kaltlufteinlass und/oder am Kaltlufteinlass und/oder innerhalb des Wärmetauscherraums und/oder am Warmluftauslass und/oder ausgangsseitig des Kaltluftauslass, auch stromabwärts einer dem Luftvorwärmer nachgeschalteten Feuerung. Weiter ergänzend oder alternativ kann es auch vorgesehen sein, dass die Regeleinheit Sensorinformationen eines Feuerraumdruck- und/oder -volumenstromsensors erhält und/oder einen solchen mit umfasst und zur Regelung auf die dort gewonnenen Informationen zurückgreift. Dieser Feuerraumdruck- und/oder -volumenstromsensor ist in Bezug auf die Durchströmungsrichtung der Luft durch eine beispielsweise Müllverbrennungsanlage stromabwärts der Feuerung, insbesondere innerhalb eines Kesselzuges, angeordnet.

Grundsätzlich ist es möglich, pro Versorgungsbalken jeweils nur einen Druckluftauslass vorzusehen. Um eine flächendeckendere Abreinigung der vorhandenen Wärmetauscherrohre zu ermöglichen, können mehrere Versorgungsbalken im Wärmetauscherraum angeordnet sein. Bevorzugt ist es jedoch, wenn über die Länge des/der Versorgungsbalken verteilt eine Vielzahl von Druckluftauslässen, insbesondere Lavaldüsen, angeordnet ist. Auf diese Weise lässt sich die Reinigungseffizienz eines Versorgungsbalkens erheblich verbessern. Die konkrete Ausbildung der Druckluftauslässe kann variieren. Im einfachsten Fall handelt es sich hier um einfache Durchgangsbohrungen. Es ist jedoch vorteilhaft, wenn die Druckluft gerichtet aus dem Versorgungsbalken auftritt. Bevorzugt wird daher zur Ausbildung des wenigstens einen Druckluftauslasses auf konkret Lavaldüsen zurückgegriffen, die beispielsweise ein fächer- und/oder kegelförmiges Austrittsbild der Druckluft bewirken. Auf diese Weise können die Lavaldüsen zielgerichtet auf die zu reinigenden Areale ausgerichtet werden. Besonders bevorzugt ist es, wenn sämtliche Druckluftauslässe eines Versorgungsbalkens, insbesondere aller Versorgungsbalken, ausschließlich mit Lavaldüsen ausgestattet sind.

Entsprechend ist es somit auch bevorzugt, wenn der wenigstens eine Druckluftauslass in Richtung wenigstens eines Wärmetauscherrohres ausgerichtet am Versorgungsbalken angeordnet ist. Der Druckluftauslass zielt mit anderen Worten auf wenigstens ein Wärmetauschrohr bzw. ist derart angeordnet, dass der von ihm ausgehende Druckluftimpuls bzw. das Austrittsbild wenigstens ein Wärmetauscherrohr bevorzugt mehrere Wärmetauscherrohre, trifft.

Der oder die Versorgungsbalken der Druckluftreinigungseinrichtung können grundsätzlich statisch im Wärmetauscherraum angeordnet sein. Bei dieser Anordnungsalternative tritt die Druckluft somit stets gleichartig relativ zu den Wärmetauscherrohren aus. Um jedoch den Reinigungseffekt der Druckluftreinigungseinrichtung zu verbessern und gegebenenfalls die Anzahl der erforderlichen Versorgungsbalken insgesamt zu reduzieren, ist der Versorgungsbalken bevorzugt an eine Antriebseinrichtung angeschlossen, die eine Bewegung des Versorgungsbalkens innerhalb des Wärmetauscherraums ermöglicht. Die Ausgestaltung der Antriebseinrichtung kann variieren. So ist es beispielsweise möglich, den Versorgungsbalken um seine Längsachse, insbesondere wenigstens in einem Bereich von 90°, besonders in einem Bereich von wenigstens 80° und ganz besonders frei rotierbar um eine Rotationsachse auszubilden. Die Wärmetauscherrohre sind üblicherweise als sogenanntes Rohrbündel angeordnet. Dabei liegen mehrere Wärmetauscherrohre, insbesondere bezüglich ihrer Längsachsen, innerhalb einer gemeinsamen Ebene und es sind mehrere dieser Anordnungsebenen nebeneinander/übereinander liegend angeordnet vorhanden. Um nun optimale Reinigungsergebnisse zu erzielen, ist der Versorgungsbalken idealerweise derart relativ zu den Wärmetauscherrohren angeordnet, dass seine Rotationsebene, d.h. die Ebene senkrecht zu seiner Rotationsachse, parallel oder senkrecht zu einer oder mehreren Anordnungsebenen der Wärmetauscherrohre liegt. Dabei verläuft eine Rotationsebene des Versorgungsbalkens besonders bevorzugt parallel zu einer Anordnungsebene der Wärmetauscherrohre. Der Versorgungsbalken ist dabei bevorzugt um seine Längsachse drehbar. Längsachse und Rotationsachse fallen dann zusammen und verlaufen senkrecht zur Rotationsebene. Ergänzend oder alternativ kann es auch vorgesehen sein, den Versorgungsbalken entlang seiner Längsachse oder entlang einer anderen Verstellachse verschiebbar auszubilden. Schließlich umfasst die Erfindung auch Ausführungsformen, die, ergänzend oder alternativ zu den vorstehend genannten Bewegungsmustern, eine Verschwenkung des Versorgungsbalkens um eine senkrecht zu seiner Längsachse verlaufende Schwenkachse ermöglichen. Bei dieser Ausführungsform wird der Versorgungsbalken somit vergleichbar einem Scheibenwischer innerhalb des Wärmetauscherraums bewegt. Eine weitere Alternative Ausführung der Erfindung liegt darin, die einzelnen Druckluftauslässe gegenüber dem Versorgungsbalken bewegbar auszubilden, beispielsweise durch verstellbare Düsen etc. Als Antriebseinrichtung zur Durchführung der vorstehend genannten Bewegungen wird üblicherweise auf entsprechende Elektro- und/oder Hydromotoren oder ähnliches zurückgegriffen, wobei auch geeignete Verstellgetriebe genutzt werden können. Der Motor ist dabei idealerweise außerhalb des Wärmetauscherraums angeordnet. Besonders bevorzugt ist die Rotation des Versorgungsbalkens um seine Längsachse, da hier der für die Bewegung des Versorgungsbalkens innerhalb des Wärmetauscherraums erforderliche Freiraum äußerst gering ist.

Ist der Versorgungsbalken wie vorstehend beschrieben bewegbar ausgebildet, ist es hierzu bevorzugt, wenn die Luftvorwärmeinrichtung eine Steuerung mit umfasst, die den Betrieb des Versorgungsbalkens, d.h. die Aktivierung und Deaktivierung eines Ausströmens von Reinigungsluft aus dem Versorgungsbalken, in Abhängigkeit von seiner aktuellen Relativlage zu den Wärmetauscherrohren steuert, insbesondere umfassend einen Lagesensor, besonders einen Winkel- oder Wegmesssensor, und/oder eine mechanisch wirkende Steuereinrichtung, insbesondere umfassend eine Segmentscheibe und/oder eine Steuerkulisse. Wird der Versorgungsbalken bewegt, ändert sich seine Relativlage zu den Wärmetauscherrohren und damit auch die Relativlage des wenigstens einen Druckluftauslasses. Dies kann dazu führen, dass Positionen des Versorgungsbalkens eingenommen werden, in denen der aus dem wenigstens einen Druckluftauslass austretende Reinigungsluftstrom gar nicht auf eine Oberfläche eines Wärmetauscherrohres gerichtet ist, sondern beispielsweise in den Raum hinein oder auf einen Innenwand des Wärmetauscherraums gerichtet ist. Mit dem aus dem Druckluftauslass austretenden Druckluftimpuls kann in diesen Positionen somit kein Reinigungseffekt an den Wärmetauscherrohren erreicht werden. In diesen Stellungen erfüllt die aus dem wenigstens einen Druckluftauslass austretende Reinigungsluft damit zumindest keine nennenswerte Reinigungsfunktion an einem Wärmetauscherrohr, was die Effizienz des Gesamtsystems mindert. Die Steuerung ist erfindungsgemäß nun bevorzugt derart ausgebildet, dass sie eine solche Auslassöffnung dann aktiviert (so dass sie Reinigungsluft in den Wärmetauscherinnenraum entlässt), wenn die Auslassöffnung eine solche Position inne hat, dass der aus ihr austretende Reinigungsluftstrom zumindest teilweise auf ein Wärmetauscherrohr trifft, und dann deaktiviert (so dass sie keine Reinigungsluft entlässt), wenn die Auslassöffnung eine solche Position inne hat, dass der aus ihr austretende Reinigungsluftstrom/-impuls nicht auf ein Wärmetauscherrohr trifft. Es ist auf diese Weise mit anderen Worten sichergestellt, dass mit der aus der jeweiligen Auslassöffnung austretenden Reinigungsluft/-impuls auch tatsächlich eine Reinigung der Wärmetauscherrohre erfolgt bzw. diese zumindest in Kontakt mit dem aus der jeweiligen Auslassöffnung austretenden Reinigungsluftstrom gelangt. Eine solche Steuerung kann insbesondere eine mechanische und/oder elektronische Ventilsteuerung umfassen, beispielsweise in Form eines Zuleitventils, über das Reinigungsluft der Auslassöffnung zugeführt wird. Die Steuerung kann dabei derart ausgebildet sein, dass einzelne Auslassöffnungen bis hin zu allen Auslassöffnungen eines Versorgungsbalkens individuell, gruppiert oder gemeinsam angesteuert und geschaltet werden. Wesentlich ist, dass der Steuerung Informationen darüber zur Verfügung stehen, welche aktuelle Position der Versorgungsbalken in Bezug auf den Wärmetauscherinnenraum gerade inne hat. Dazu kann es bevorzugt vorgesehen sein, dass die Steuerung auf einen geeigneten Lagesensor zurückgreift, der beispielsweise die aktuelle Drehlage und/oder die Verschiebeposition etc. des Versorgungsbalkens ermittelt. Es kann ferner vorgesehen sein, dass diese Steuerung über eine geeignete mechanische Einrichtung, insbesondere ein Segmentscheibe erfolgt. Wesentlich ist somit, dass die Steuerung als Bereichssteuerung funktioniert, die eine bereichsweise Aktivierung/Deaktivierung der Auslassöffnung des Versorgungsbalkens in Abhängigkeit von der aktuellen Relativlage (insbesondere Dreh- und/oder Verschiebelage) des Versorgungsbalkens innerhalb des Wärmetauscherraums steuert. Diese (Bereichs-)Steuerung kann Teil der Regeleinheit sein, kann aber auch rein mechanisch wirkend ausgebildet sein.

Die Wärmetauscherrohre sind üblicherweise mit ihren Längsachsen parallel zueinander und gruppiert in mehreren zueinander beabstandeten Anordnungsebenen angeordnet. Der Versorgungsbalken bzw. zumindest der wenigstens eine Druckluftauslass ist bevorzugt in einem Zwischenraum zwischen den Anordnungsebenen angeordnet. Dabei ist es möglich, dass der Versorgungsbalken mit seiner Längserstreckung parallel zu den Längsachsen der Wärmetauscherrohren verläuft. Bevorzugt ist es jedoch, wenn der Versorgungsbalken in dem Zwischenraum zwischen den Anordnungsebenen derart angeordnet ist, dass er bei einer Projektion in eine Anordnungsebene mit seiner Längsachse senkrecht zu den Längsachsen der Wärmetauscherrohre verläuft. Insbesondere erstreckt sich der Versorgungsbalken durch mehrere Anordnungsebenen hindurch. Mit einem Druckluftauslass können auf diese Weise zumindest teilweise beispielsweise Wärmetauscherrohre zweier verschiedener Ebenen abgereinigt werden, so dass diese Anordnung besonders günstig ist.

Weitere Variationsmöglichkeiten ergeben sich insbesondere im Hinblick auf die Relativlage des Versorgungsbalkens in Bezug auf die Hauptströmungsrichtung der Verbrennungsluft durch den Wärmetauscherraum. Die Hauptströmungsrichtung der Verbrennungsluft bezeichnet dabei diejenige Bewegungsrichtung der Verbrennungsluft innerhalb des Wärmetauscherinnenraums, die diese im Wesentlichen auf ihrem Weg vom Kaltlufteinlass zum Warmluftauslass innehat. Der Versorgungsbalken ist dabei idealerweise mit seiner Längsachse senkrecht zur Richtung der Hauptströmungsrichtung der Luft durch den Innenraum angeordnet. Insbesondere bei einer rotierenden Ausführung des Versorgungsbalkens ist dabei trotz der Strömungsbewegung der Verbrennungsluft sichergestellt, dass der Reinigungseffekt in verschiedenen Drehpositionen im Wesentlichen identisch ist, da der Druckluftimpuls in der Regel derart gewählt wird, dass er wesentlich höher ist als die Primärluftgeschwindigkeit der Verbrennungsluft durch den Verbrennungsraum.

Am Versorgungsbalken ist bevorzugt eine Mehrzahl von Druckluftauslässen angeordnet. Die Druckluftauslässe eines Versorgungsbalkens sind dabei vorzugsweise zueinander versetzt am Versorgungsbalken derart positioniert, dass sie in Längsrichtung des Versorgungsbalkens gesehen jeweils auf Höhe eines Zwischenraums zwischen zwei Rohrlagen am Versorgungsbalken sitzen. Damit sind die Druckluftauslässe bevorzugt auf Höhe des Zwischenraums zwischen zwei Anordnungsebenen der Wärmetauscherrohren positioniert. Der von einem Druckluftauslass ausgehende Druckimpuls gelangt somit in den Zwischenraum zwischen zwei Anordnungsebenen der Wärmetauscherrohren und kann dadurch gleichzeitig die einander gegenüberliegenden Seiten von Wärmetauscherrohren in zwei Anordnungsebenen abreinigen. Idealerweise sitzen die Druckluftauslässe dabei jeweils im Wesentlichen auf Höhe der Mitte zwischen zwei Anordnungsebenen von Wärmetauscherrohren.

Die Anzahl der Versorgungsbalken der Luftvorwärmeinrichtung kann, insbesondere in Abhängigkeit von der Größe der Luftvorwärmeinrichtung und/oder der Versorgungsbalken, variieren. Dabei ist es grundsätzlich möglich, dass jeder der vorhandenen Versorgungsbalken über ein Leitungssystem an eine eigene Druckluftversorgung angeschlossen ist. Bevorzugt erfolgt die Druckluftversorgung von wenigstens zwei Versorgungsbalken und insbesondere sämtlicher vorhandener Versorgungsbalken jedoch über eine gemeinsame Druckluftversorgung. Hier ist somit ein Leitungssystem vorhanden, über das die wenigstens zwei und insbesondere sämtliche der vorhandenen Versorgungsbalken an eine einzige Druckversorgung angeschlossen sind. Hierdurch kann der apparative Aufwand reduziert werden.

Wie vorstehend bereits angeführt, ist es, um eine optimale Prozessführung zu ermöglichen, bevorzugt, wenn die Luftvorwärmeinrichtung eine Steuereinheit/Steuerung umfasst, die den Betrieb des wenigstens einen Versorgungsbalkens steuert. Wesentliches Merkmal der Steuereinheit ist somit, dass sie den Betriebszustand des wenigstens einen Versorgungsbalkens beeinflussen kann. Konkret kann es sich hier um verschiedene Funktionalitäten handeln, die für sich oder einander ergänzend vorgesehen sein können. Beispielsweise kann hier, wie vorstehend bereits angeführt, das, insbesondere lageabhängige, An- und Abschalten eines Versorgungsbalkens und/oder der Druckauslässe eines Versorgungsbalkens vorgesehen sein. Auch eine graduelle Veränderung des Auslassdruckes der Druckluft über den jeweiligen Druckluftauslass ist hiervon mit umfasst. Konkret ist es für diese Ausführungsform beispielsweise vorgesehen, dass wenigstens zwei Versorgungsbalken vorhanden sind, die getrennt voneinander über die eine Steuereinheit gesteuert werden. Bei dieser Ausführungsform ist es somit möglich, den Betrieb der wenigstens zwei Versorgungsbalken individuell und nicht zwangsläufig gleichartig zu gestalten. Ergänzend oder alternativ kann es vorgesehen sein, dass der Betrieb des wenigstens einen Versorgungsbalkens kontinuierlich oder intervallartig, insbesondere in Abhängigkeit wenigstens eines weiteren Betriebsparameters, wie beispielsweise einem Druckabfall zwischen dem Kaltlufteinlass und dem Warmluftauslass, erfolgt. Das Ausmaß des Druckabfalls zwischen dem Kaltlufteinlass und dem Warmluftauslass ist ein Indikator für den Verschmutzungsgrad der Wärmetauscherrohre im Wärmetauscherraum. Mit einem intervallartigen Betrieb wird insbesondere ein zeitlich getaktetes An- und Abschalten der Druckluftreinigungseinrichtung bezeichnet. Dies kann beispielsweise über die Ansteuerung geeigneter Ventile und/oder die Ansteuerung der Druckluftversorgung, beispielsweise der Aktivierung und Deaktivierung eines entsprechenden Kompressors, erfolgen. Es ist auch möglich, pro Versorgungsbalken wenigstens zwei Druckluftauslässe und/oder Druckluftauslassgruppen vorzusehen, die über von der Steuereinheit angesteuerte Ventile, insbesondere unabhängig voneinander, schaltbar sind. Diese Weiterbildung der Erfindung ermöglicht es somit, an einem Versorgungsbalken je nach Bedarf verschiedene Areale zum Druckluftauslass freizugeben oder zu sperren. Für den Fall, dass der Versorgungsbalken bewegbar, insbesondere gemäß den vorstehenden Ausführungen, ausgebildet ist, ist es besonders bevorzugt, wenn die Steuereinheit ergänzend oder alternativ auch die Bewegung des Versorgungsbalkens, beispielsweise durch die Ansteuerung entsprechender Antriebsmotoren und/oder Aktoren, steuert. Die Steuereinheit kann dabei Teil der Regeleinheit sein.

Weitere Variationsmöglichkeiten ergeben sich im Hinblick auf die konkrete Ausgestaltung der Druckluftauslässe. Diese sind bevorzugt als Lavaldüsen ausgebildet. Diese sind weiter bevorzugt derart an dem wenigstens einen Versorgungsbalken angeordnet, dass die Druckluft in einem Winkel von maximal 80°, insbesondere maximal 70° und ganz besonders maximal 65° auf eine Anordnungsebene der Wärmetauscherrohre trifft. Mit den angegebenen Winkelbereichen ist sichergestellt, dass ein befriedigendes Abreinigungsergebnis erhalten wird. Der Winkel bemisst sich dabei an der Außenkante des jeweiligen Austrittsbildes der Druckluft aus dem Druckluftauslass, das üblicherweise fächerförmig und/oder kegelförmig ist. Die Ausrichtung der Düsen erfolgt grundsätzlich bevorzugt derart, dass mit dem Druckluftimpuls die Gasse zwischen Gruppen benachbarter Wärmetauscherrohre getroffen wird.

Ein weiterer Grundgedanke der Erfindung besteht in einer Müllverbrennungsanlage. Derartige Anlagen werden allgemein zu Energiegewinnung aus Müll und zur Verkleinerung des zu deponierenden Müllmaterials genutzt. Eine gattungsgemäße Müllverbrennungsanlage umfasst einen Müllbunker, der der Aufnahme und Zwischenlagerung des Mülls dient, und eine Materialzuführung vom Müllbunker zu einer Verfeuerungsstelle (auch Feuerung), die den Müll dem eigentlichen Verfeuerungsprozess zuführt. Um eine befriedigende Verfeuerung des Mülls zu ermöglichen, ist ferner eine Verbrennungsluftversorgung für die Verfeuerungsstelle (Feuerung) vorgesehen, wobei die Verbrennungsluftversorgung derart ausgebildet ist, dass Luft aus dem Müllbunker über eine Luftvorwärmeinrichtung der Verfeuerungsstelle (Feuerung) zugeführt wird. Es ist somit bereits bekannt, die Verbrennungsluft über eine Luftvorwärmeinrichtung, insbesondere auf ein Temperaturniveau von 120 bis 140 °C, aufzuwärmen und diese aufgewärmte Luft zur Vortrocknung des zu verfeuernden Mülls zu nutzen. Die erfindungsgemäße Müllverbrennungsanlage zeichnet sich dadurch aus, dass sie eine erfindungsgemäße Luftvorwärmeinrichtung, wie sie vorstehend beschrieben worden ist, aufweist. Durch die erfindungsgemäß vorgesehene Druckluftreinigungseinrichtung wird insbesondere der bei der Ansammlung von Verbrennungsluft über den Müllbunker gesteigerten Verschmutzung der Wärmetauscherrohre Rechnung getragen. Abschaltzeiten zu Wartungs- und Reinigungszwecken der Luftvorwärmeinrichtung lassen sich erheblich reduzieren oder sogar gänzlich verhindern, sodass die erfindungsgemäße Müllverbrennungsanlage wesentlich effizienter betreibbar ist.

Ein Schwerpunkt der Erfindung liegt auch in einem Verfahren zum Reinigen einer Luftvorwärmeinrichtung, insbesondere einer erfindungsgemäßen Luftvorwärmeinrichtung wie vorstehend beschrieben, besonders für eine Müllverbrennungsanlage. Der wesentliche Schritt des erfindungsgemäßen Verfahrens besteht einerseits im Ausblasen einer Druckluft aus einem Versorgungsbalken zum Abreinigen von an den Wärmetauscherrohren anhaftenden Verunreinigungen. Das erfindungsgemäße Verfahren ermöglicht es somit, das Abreinigen der anhaftenden Verunreinigungen während des Betriebs der Luftvorwärmeinrichtung durchzuführen, sodass diesbezügliche Wartungsintervalle entfallen oder zumindest erheblich verkürzt werden. Andererseits erfolgt erfindungsgemäß ein Regeln der Primärluftzufuhr in Abhängigkeit vom Betriebszustand des Versorgungsbalkens. Zu Einzelheiten der Regelung wird auf die vorstehende Offenbarung zur erfindungsgemäßen Luftvorwärmeinrichtung Bezug genommen. Wesentlich ist, dass mit dem Regeln der Primärluftzufuhr die in die Luftvorwärmeinrichtung über die Reinigungseinrichtung eingebrachte Luftmenge kompensiert werden kann, so dass am Warmluftauslass unabhängig vom Betriebszustand der Druckluftreinigungseinrichtung ein im Wesentlichen konstanter Volumenstrom gewährleistet ist.

Vorteilhaft ist es, wenn beim Ausblasen der Druckluft aus dem Versorgungsbalken dieser bewegt, insbesondere rotiert oder verschoben, wird. Dadurch können größere Areale durch den Versorgungsbalken gereinigt werden als es bei einem statischen Versorgungsbalken der Fall ist. Ergänzend oder alternativ ist ein intervallartiger Betrieb des Versorgungsbalkens vorgesehen. Dies erfolgt durch ein An- und Abschalten des Ausblasens der Druckluft. Ganz besonders kann es vorgesehen sein, dass dies in Abhängigkeit von einer Dreh- und/oder Verschiebeposition des Versorgungsbalkens erfolgt, wobei hierzu dann ergänzend ein Erfassen und Überwachen der Dreh- und/oder Verschiebeposition, insbesondere über geeignete Sensoren, vorgesehen ist. Auch ist es möglich, den Ausblasdruck zu verändern/variieren und auf diese Weise verbesserte Reinigungsergebnisse zu erhalten. Es ist zudem möglich, den Reinigungsprozesse losgelöst vom Betrieb der Luftvorwärmereinrichtung zur Aufheizung von Verbrennungsluft zu gestalten. Allerdings ist es dazu erforderlich, dass zwischenzeitlich der Betrieb der Luftvorwärmereinrichtung unterbrochen wird. Bevorzugt ist es daher, wenn das Ausblasen der Druckluft aus dem wenigstens einen Versorgungsbalken unter Fortsetzung des Betriebs der Luftvorwärmeinrichtung bzw. während des Betriebs der Luftvorwärmereinrichtung bzw. der Müllverbrennungsanlage erfolgt.

Zur Kompensation der durch die Druckluftreinigungseinrichtung in den Wärmetauscherinnenraum eingebrachten Luftmenge erfolgt bevorzugt ein Senken der Primärluftzufuhr bei einem Anschalten und/oder Erhöhen des Volumenstroms der Luft durch den wenigstens einen Druckluftauslass der Druckluftreinigungseinrichtung und/oder ein Erhöhen der Primärluftzufuhr bei einem Abschalten und/oder Senken des Volumenstroms der Luft durch den wenigstens einen Druckluftauslass der Druckluftreinigungseinrichtung. Ergänzend oder alternativ kann auch ein Konstanthalten eines Feuerraumdrucks, insbesondere einer der Luftvorwärmeinrichtung nachgeschalteten Feuerung einer Müllverbrennungsanlage, durch Variieren der Primärluftzufuhr bei einer Änderung des Betriebszustandes der Druckluftreinigungseinrichtung vorgesehen sein.

Ein weiterer Aspekt der Erfindung liegt schließlich in einem Verfahren zum Betrieb einer Müllverbrennungsanlage, insbesondere einer vorstehend beschriebenen erfindungsgemäßen Müllverbrennungsanlage. Idealerweise kommt dabei das erfindungsgemäße Verfahren zur Anwendung.

Nachstehend wird die Erfindung anhand der in den Figuren angegebenen Ausführungsbeispiele näher erläutert. Es zeigen schematisch
Figur 1: den Aufbau einer Müllverbrennungsanlage;
Figur 2: den Aufbau der Luftvorwärmeinrichtung aus Figur 1;
Figuren 3A und 3B: Querschnittsansichten durch verschiedene Varianten von Versorgungsbalken;
Figur 4A: perspektivische Ansicht eines Ausschnitts eines Rohrbündels mit einem Versorgungsbalken einer erfindungsgemäßen Druckluftreinigungseinrichtung;
Figur 4B: Detailansicht aus Figur 4A;
Figuren 5A, 5B und 5C: Bewegungsalternativen des Versorgungsbalkens; und
Figuren 6A, 6B und 6C: Ausführungsalternativen von Versorgungsbalken;
Figur 7: Draufsicht auf zwei Rohrbündel und einem Versorgungsbalken mit einer Bereichssteuerung.

Gleiche Bauteile bzw. funktionsgleiche Bauteile sind in den Figuren mit gleichen Bezugszeichen bezeichnet, wobei nicht jedes sich wiederholende Bauteil in jeder Figur separat gekennzeichnet ist.

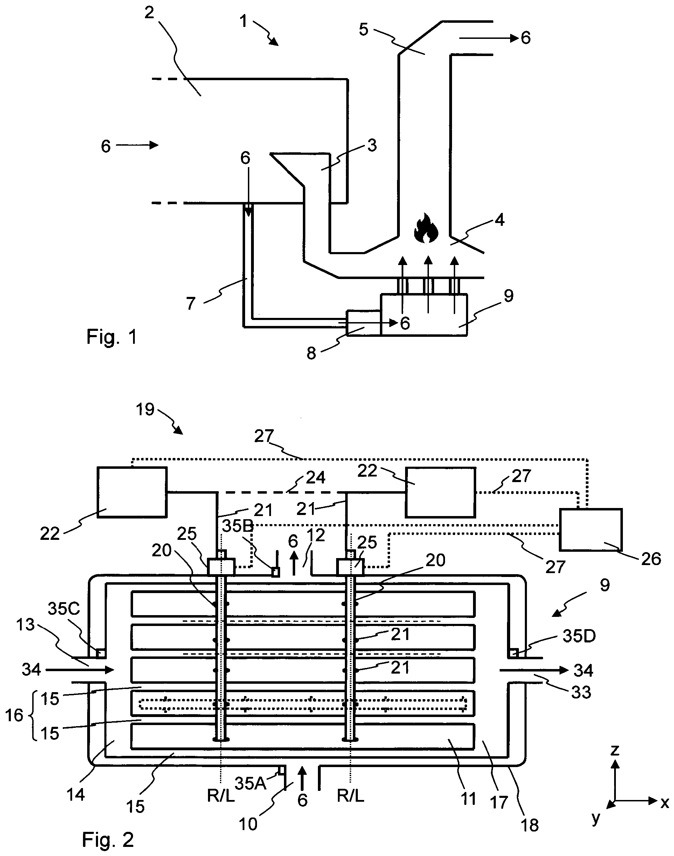

Figur 1 veranschaulicht zunächst stark schematisiert den prinzipiellen Aufbau einer Müllverbrennungsanlage 1. Wesentliche Elemente sind ein Müllbunker 2, ein Befülltrichter 3, ein Verbrennungsraum 4, ein Abzug 5 (Kesselzug), eine Verbrennungsluftführung 7 für Verbrennungsluft 6, eine Gebläseeinrichtung 8 sowie eine Luftvorwärmeinrichtung 9. Der zu verbrennende Müll wird im Müllbunker 2 angeliefert und gelagert und über den Befülltrichter 3 dem Verbrennungsraum 4 zugeführt. Über den Müllbunker 2 erfolgt ferner eine Verbrennungsluftansaugung mithilfe der Gebläseeinrichtung 8. Die angesaugte Verbrennungsluft 6 wird über die Verbrennungsluftführung 7 angesaugt und der Luftvorwärmeinrichtung 9 zugeführt, dort erwärmt und von dort in den Verbrennungsraum 4, unter anderem auch zur Trocknung des vom Befülltrichter 3 kommenden Mülls, der Feuerung zugeführt. Die der Luftvorwärmeinrichtung 9 zugeführte Verbrennungsluft passiert somit den Müllbunker 2 und weist dementsprechend eine hohe Staubbelastung auf. Dieser Staub kann sich in einem Wärmetauscherraum an den dort vorhandenen Wärmetauscherrohren der Luftvorwärmeinrichtung 9 absetzen und dadurch die Effizienz des Aufheizvorgangs für die Verbrennungsluft 6 verschlechtern.

Figur 2 verdeutlicht den schematischen Aufbau der Luftvorwärmeinrichtung 9. Diese umfasst einen Kaltlufteinlass 10, einen Wärmetauscherraum 11 sowie einen Warmluftauslass 12. Die über die Gebläseeinrichtung 8 (Fig. 1) angesaugte Verbrennungsluft 6 wird somit über den Kaltlufteinlass 10 in die Luftvorwärmeinrichtung 9 eingeleitet und verlässt diese über den Warmluftauslass 12 zum Verbrennungsraum 4 hin (Fig. 1). Die Aufwärmung der Verbrennungsluft 6 erfolgt mithilfe eines Wärme abgebenden Mediums, bei dem es sich beispielsweise um Dampf oder Ähnliches handeln kann. Dieses wird in den Wärmetauscherraum 11 über einen Eingang 13 eingeleitet und anschließend über einen Eingangssammler 14 auf eine Vielzahl von Wärmetauscherrohren 15 aufgeteilt. Die Wärmetauscherrohren 15 sind in im Stand der Technik bekannterweise in Rohrbündeln 16 angeordnet. Ein Rohrbündel 16 bezeichnet somit eine Mehrzahl systematisch und gruppiert zueinander angeordneter Wärmetauscherrohre 15. Die Wärmetauscherrohre 15 durchlaufen den Wärmetauscherraum bis hin zu einem Auslasssammler 17, von dem aus das Wärme abgebende Medium über den Auslass 33 die Luftvorwärmeinrichtung 9 verlässt. Der Weg des Wärme abgebenden Mediums ist mit den Pfeilen 34 bezeichnet Der Wärmetauscherraum 11 ist von einem Gehäuse 18 umgeben. Zur weiteren Orientierung sind in Figur 2 und den weiteren Figuren Raumachsen angegeben, wobei y die Vertikalachse und x und z die beiden Horizontalachsen bezeichnen. Alternativ zu den in Fig. 2 gezeigten Ausführungsform mit horizontal verlaufenden Wärmetauscherrohren 15 sind auch Varianten von der Erfindung mit umfasst, bei denen die Wärmetauscherrohrer 15 ergänzend oder alternativ vertikal, horizontal oder in Schräglagen angeordnet sind.

Im Betrieb der Luftvorwärmeinrichtung 9 kann es durch die staubbelastete und über den Müllbunker 2 angesaugte Verbrennungsluft dazu kommen, dass sich auf der Außenfläche der Wärmetauscherrohre 15 mehr und mehr Staubpartikel absetzen. Dadurch wird die Effizienz des Wärmeübergangs vom Wärme abgebenden Medium auf die Verbrennungsluft vermindert. Beim in Figur 2 angegebenen Ausführungsbeispiel ist es daher vorgesehen, Ablagerungen auf den Wärmetauscherrohren 15 über eine Druckluftreinigungseinrichtung 19 abzureinigen.

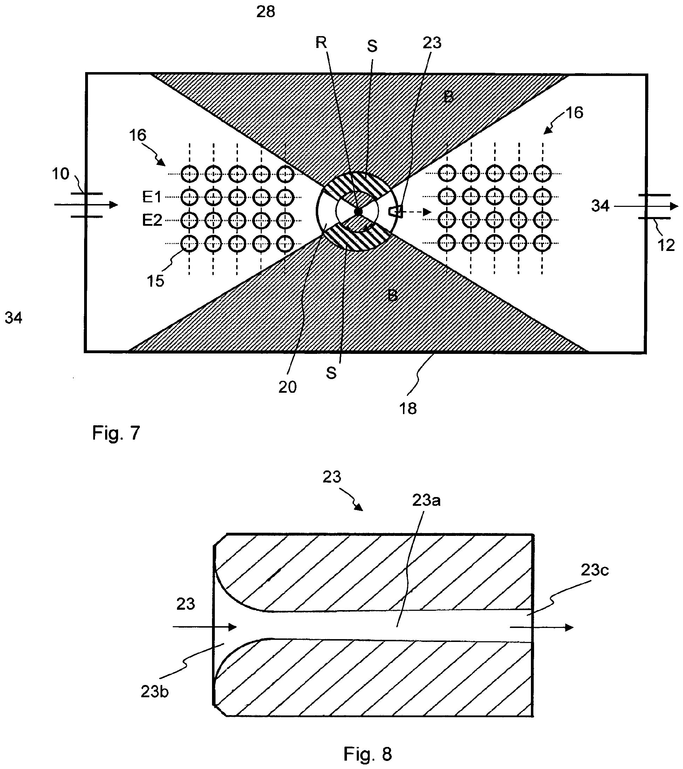

Wesentliche Elemente der Druckluftreinigungseinrichtung 19 sind wenigstens ein Versorgungsbalken 20, wenigstens ein Druckluftanschluss 21 für den Anschluss an eine Druckluftversorgung 22 sowie wenigstens ein am Versorgungsbalken 20 angeordneter Druckluftauslass 23, bei dem es sich im vorliegenden Ausführungsbeispiel um eine bzw. mehrere Druckluftdüsen vom Typ Lavaldüse handelt. Eine solche Lavaldüse ist beispielhaft in Fig. 8 in Querschnittsansicht angegeben. Sie umfasst eine Durchgangsöffnung 23a mit einem Lufteinlass 23b und einem Luftauslass 23c. Wie in der Querschnittsansicht aus Fig. 8 verdeutlicht, vereng sich der Querschnitt der Durchgangsöffnung 23a zunächst und weiter sich anschließend wieder auf. Die Druckluftversorgung 22 ist als ein Luftkompressor ausgebildet. Bei dem Versorgungsbalken 20 handelt es sich um ein längserstrecktes, lanzenartig ausgebildetes Element, welches sich von der Außenseite des Gehäuses 18 in den Wärmetauscherraum 11 hinein erstreckt. Über die Längserstreckung des Versorgungsbalkens 20 ist innerhalb des Gehäuses 18 eine Vielzahl von Druckluftauslässen 23 im Wärmetauscherraum 11 verteilt angeordnet, die im vorliegenden Ausführungsbeispiel und auch in den weiteren Ausführungsbeispielen allesamt als Lavaldüsen ausgebildet sind. Werden die außerhalb des Gehäuses 18 liegenden Druckluftanschlüsse 23 der vorhandenen Versorgungsbalken 20 somit mit Druckluft beaufschlagt, kommt es zur Abgabe eines von dem jeweiligen Druckluftauslass 23 ausgehenden Druckluftimpuls bzw. Druckluftstrahles, mit dem an der Außenmantelfläche der Wärmetauscherrohre 15 anhaftende Verunreinigungen abgeblasen werden können. Die Druckluftauslässe 23 sind dabei derart verteilt am Versorgungsbalken 20 angeordnet, dass sie im Zwischenraum benachbarter Wärmetauscherrohre 15 liegen und/oder direkt auf die Wärmetauscherrohre 15 gerichtet sind. Im vorliegenden Ausführungsbeispiel sind insgesamt zwei Versorgungsbalken 20 von der Druckluftreinigungseinrichtung 19 umfasst, wobei selbstverständlich von der Erfindung auch Ausführungsformen mit nur einem Versorgungsbalken oder einer Vielzahl von Versorgungsbalken mit umfasst sind. Beim vorliegenden Ausführungsbeispiel ist jedem Versorgungsbalken 20 und jedem Druckluftanschluss 21 eine eigene Druckluftversorgung, beispielsweise ein eigener Kompressor, zugeordnet. Es ist jedoch alternativ auch möglich, mehrere und insbesondere sämtliche der vorhandenen Versorgungsbalken 20 über eine gemeinsame Druckluftversorgung bzw. einen gemeinsamen Kompressor zu versorgen. Dies ist in der Figur 2 mit der Verbindungsleitung 24 angezeigt. Dann kann entsprechend die linke oder die rechte Druckluftversorgung entfallen.

Um die Reinigungseffizienz der Druckluftreinigungseinrichtung 19 noch weiter zu verbessern, sind die Versorgungsbalken 20 bevorzugt bewegbar innerhalb des Gehäuses 18 angeordnet. Beim in Figur 2 angegebenen Ausführungsbeispiel sind die Versorgungsbalken 20 jeweils um eine Rotationsachse R drehbar. Die Rotationsachse R erstreckt sich entlang der Längsachse L des jeweiligen Versorgungsbalkens 20. Der Antrieb der Drehbewegung der Versorgungsbalken 20 um die Rotationsachse R erfolgt durch entsprechende außerhalb des Gehäuses 18 liegende Antriebsmotoren 25, beispielsweise Elektro- oder Hydromotoren. Grundsätzlich ist es möglich, die Versorgungsbalken 20 während des Betriebs der Luftvorwärmeinrichtung 9 permanent zu bewegen. Vorteilhaft ist es jedoch, wenn der Betrieb der Versorgungsbalken 20, sowohl im Hinblick auf eine Druckluftbeaufschlagung als auch im Hinblick auf die Drehbewegung, intervallartig erfolgt. Hierzu ist es im vorliegenden Ausführungsbeispiel vorgesehen, dass eine Regeleinheit 26 den Betrieb der Druckluftreinigungseinrichtung 19 und insbesondere die Antriebsmotoren 25 sowie die Druckluftversorgung, die Druckluftauslässe und/oder die Druckluftanschlüsse steuert. Dazu sind von der Regeleinheit 26 abgehend entsprechende Steuerleitungen 27 vorhanden, bei denen es sich beispielsweise um Signalkabel oder auch Funkverbindungen handeln kann. Ergänzend können beispielsweise auch entsprechende Sensoren, insbesondere an der Druckluftversorgung 22, den Druckluftanschlüssen 21, den Druckluftauslässen 23 und/oder den Antriebsmotoren 25 vorgesehen sein, die mit der Regeleinheit 26 vorteilhafterweise verbunden sind. Mithilfe der Sensoren ist es möglich, den Betrieb der jeweiligen Komponenten zu überwachen und auf diese Weise beispielsweise schnell über Fehlfunktionen etc. informiert zu werden. Zu diesem Anlass kann es vorgesehen sein, dass die Regeleinheit 26 selbst eine geeignete Anzeigevorrichtung aufweist und/oder jeweiligen Informationen an einen Leitstand der Müllverbrennungsanlage 1 weiterleitet. Ergänzend oder alternativ können auch Primärluftsensoren in Form von Druck- und/oder Volumenstromsensoren 35A und 35B vorgesehen sein, über die der Eingangs- und der Ausgangsdruck der Verbrennungslust in die Luftvorwärmreinrichtung 9 ermittelbar und daraus der vorliegende Druckabfall zwischen dem Kaltlufteinlass 10 und dem Warmluftauslass 12 ermittelbar ist. Insbesondere der stromabwärts gelegene Sensor 35B kann ergänzend oder alternativ zum Sensor 35B in Fig. 2 auch im Abzug 5 stromabwärts der Feuerung angeordnet sein (Kesselzug). Der ermittelte Druckabfall kann als Indikator für den Verschmutzungsgrad herangezogen werden. Mithilfe der mit der Regeleinheit 26 in Datenverbindung stehenden Sensoren 35A und 35B kann aber insbesondere auch der Betrieb der Druckluftreinigungseinrichtung 19 in Bezug auf den am Warmluftauslass 12 austretenden Primärluftstrom über die Regeleinheit 26 geregelt werden und auf diese Weise am Warmluftauslass unabhängig vom Betriebszustand der Druckluftreinigungseinrichtung 19 ein im Wesentlichen konstanter Volumenstrom erhalten werden. Dazu regelt die Regeleinheit 26 das in Fig. 1 gezeigte Ansauggebläse 8 für Primärluft. Wird beispielsweise die Druckluftreinigungseinrichtung 19 in Betrieb genommen, senkt die Regeleinheit 26 die Ansaugleistung des Ansauggebläses 8 soweit, bis am Sensor 35B wieder das gewünschte Druckniveau bzw. der gewünschte Volumenstrom warmer Primärluft ansteht und umgekehrt. Die Sensoren 35A und 35B sind daher ebenfalls in Signalverbindung mit der Regeleinheit 26, so dass diese den Druckabfall ermitteln und davon abhängig den Betrieb der Druckluftreinigungseinrichtung 19 steuern/regeIn kann. Weiter ergänzend oder alternativ können auch Sensoren 35C und 35D vorhanden sein, die beispielsweise auch dazu genutzt werden können, anderen Stellen im Wärmetauscherinnenraum oder Bereiche der Warmluft-/Dampfführung betreffend das Wärme abgebende Medium genutzt werden.

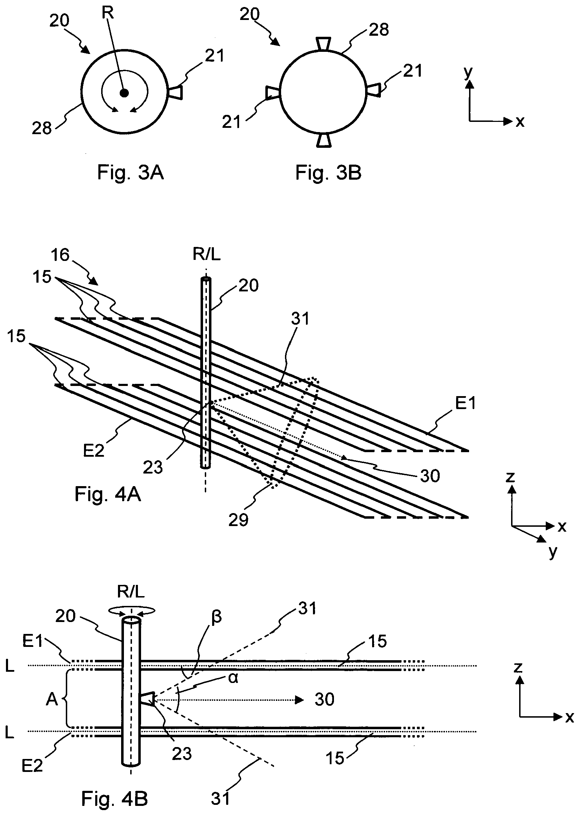

Die Figuren 3A und 3B sind Querschnittsansichten durch die Längsachse L bzw. Rotationsachse R der Versorgungsbalken 20 aus Figur 2. Für den Versorgungsbalken 20 gemäß Figur 3A ist es vorgesehen, dass dessen Außenmantelfläche 28 jeweils einen einzigen Druckluftauslass 23 im gezeigten Umfangssegment bzw. auf einer bestimmten Höhe entlang der Längsachse L aufweist. Bei dieser Ausführungsform ist somit jeweils ausschließlich ein Druckluftauslass 23 in einer Ebene senkrecht zur Längsachse L angeordnet. Wie beispielsweise das Ausführungsbeispiel gemäß Figur 2 zeigt, können mehrere dieser Druckluftauslässe 23 entlang der Längsachse L versetzt angeordnet sein, beispielsweise gleichgerichtet oder auch in verschiedene Raumrichtungen ausgerichtet. Insbesondere für diese Anordnung ist es vorteilhaft, wenn der Versorgungsbalken 20 rotierbar ausgebildet ist, um den Bereich der aus dem Druckluftauslass 23 austretenden Druckluft zu vergrößern, insbesondere vollständig um die Rotationsachse R herum. Alternativ ist es auch möglich, mehrere Druckluftauslässe 23 bezüglich der Längsachse L auf gleicher Höhe am Versorgungsbalken 20 vorzusehen, wie in Figur 3B angegeben. Insbesondere derartig ausgebildete Versorgungsbalken 20 können auch statisch betrieben werden, wobei es auch hier bevorzugt ist, zumindest in beschränktem Umfang eine Bewegbarkeit, insbesondere Drehbarkeit, zu ermöglichen. Allerdings kann es insbesondere hier vorgesehen sein, dass der Drehwinkel nur eingeschränkt ist, vorliegend beispielsweise ca. 90° um die Rotationsachse R.

Die Figur 4A veranschaulicht den Wirkbereich der aus dem Druckluftauslass 23 austretenden Druckluft. Die Druckluftauslässe 23 können beispielsweise in Form spezieller Düsen, insbesondere Lavaldüsen, ausgebildet sein, die beispielsweise ein fächerförmiges oder, wie in Figur 4A gezeigt, kegelförmiges Austrittsbild der Druckluft bewirken. Im vorliegenden Ausführungsbeispiel ist der Druckluftauslass 23 ferner derart ausgebildet, dass der kegelförmige Druckluftaustritt mit seiner Zentralachse 30 senkrecht von der Längsachse L bzw. Rotationsachse R des Versorgungsbalkens 20 abgeht. Die Zentralachse bezeichnet die Kegelachse. Auf diese Weise streift der Druckluftkegel zwei Anordnungsebenen E1 und E2, in denen jeweils eine Vielzahl aus mehreren Wärmetauscherrohren 15 des Rohrbündels 16 angeordnet ist. Dies ist weiter verdeutlicht in Figur 4B dargestellt. In der Seitenansicht aus Figur 4B auf die Ebenen E1 und E2 ergibt sich diese Anordnung der Druckluftauslässe 23 zwischen den einzelnen Anordnungsebenen E1 und E2. Die Anordnungsebenen E1 und E2 sind mit dem Abstand A zueinander beabstandet angeordnet. In jeder der Anordnungsebenen E1 und E2 liegt eine Vielzahl parallel angeordneter Wärmetauscherrohre 15. Die Längsachsen L der Wärmetauscherrohren 15 verlaufen parallel zueinander. Aus dem Druckluftauslass 23 tritt der Druckluftkegel derart aus, dass seine Zentralachse 30 in der gezeigten Position parallel zur Längsachse der Wärmetauscherrohren 15 verläuft bzw. in einer Ebene parallel zu den Anordnungsebenen E1 und E2 rotiert. Der Druckluftauslass 23 ist dabei sowohl zur oberen Anordnungsebenen E1 als auch zu unteren Anordnungsebene E2 gleichmäßig beabstandet und somit zwischen den beiden Anordnungsebenen mittig positioniert. Der gerade Kreiskegel hat zwischen seinen Außenflanken 31 einen Kegelinnenwinkel α und trifft mit seinen Außenflanken 31 in einem Winkel β, der ca. bei 30° liegt, auf die Wärmetauscherrohren 15. Dies ist allerdings nur beispielhaft zu verstehen. Die Auslegung der Druckluftauslässe erfolgt in der Regel anordnungsspezifisch.

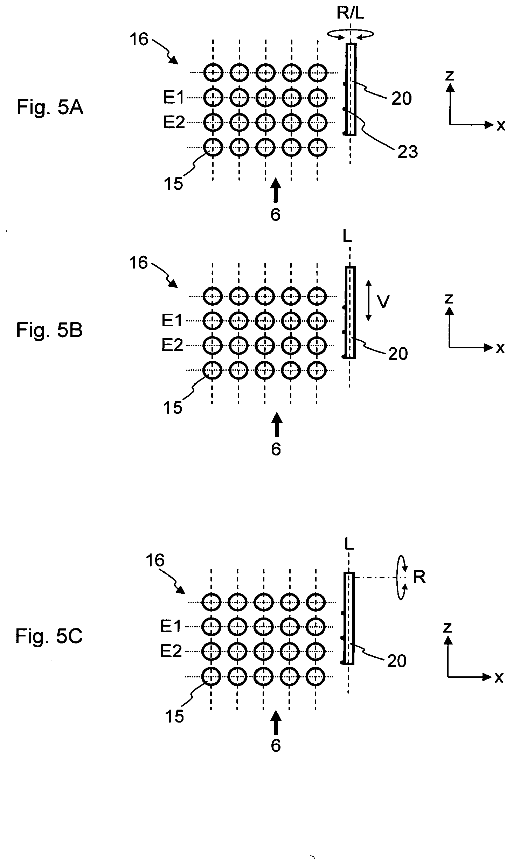

Die Figuren 5A, 5B und 5C veranschaulichen verschiedene Bewegungsmöglichkeiten des Verbindungsbalkens 20 gegenüber dem Rohrbündel 16 mit den in Anordnungsebenen (beispielsweise Ebenen E1 und E2) angeordneten Wärmetauscherrohren 15. Die Figuren 5A, 5B und 5C sind dabei insbesondere lediglich als Ausschnitt aus dem Rohrbündel 16 zu verstehen. So ist es insbesondere auch vorgesehen, dass Wärmetauscherrohre auf beiden Seiten des Versorgungsbalkens 20, d.h. in den Figuren 5A, 5B und 5C rechts vom Versorgungsbalken 20, angeordnet sind. Figur 5A betrifft die Rotation des Versorgungsbalkens 20 um seine Längsachse L bzw. die Rotationsachse R. Die Längsachse L ist in den Figuren 5A, 5B und 5C als gestrichelte Linie angegeben. Die einzelnen Druckluftauslässe 23 des Versorgungsbalkens 20 sind dabei derart versetzt am Versorgungsbalken 20 angeordnet, dass sie jeweils auf Höhe eines Zwischenraumes zwischen zwei Anordnungsebenen, beispielsweise den Anordnungsebenen 1 und E2, liegen. Beim Ausführungsbeispiel gemäß Figur 5B ist der Versorgungsbalken 20 entlang seiner Längsachse L verschiebbar. Der Verschiebebewegung des Versorgungsbalkens 20 ist dabei insbesondere derart bemessen, dass er ungefähr dem Abstand zweier benachbarter Anordnungsebenen zueinander entlang der Längsachse L entspricht. Beim Ausführungsbeispiel gemäß Figur 5C ist der Versorgungsbalken 20 ebenfalls rotierbar ausgebildet, allerdings um eine Rotationsachse R senkrecht zu seiner Längsachse L. Der Versorgungsbalken 20 vollzieht damit als Ganzes somit eine scheibenwischerartige Bewegung.

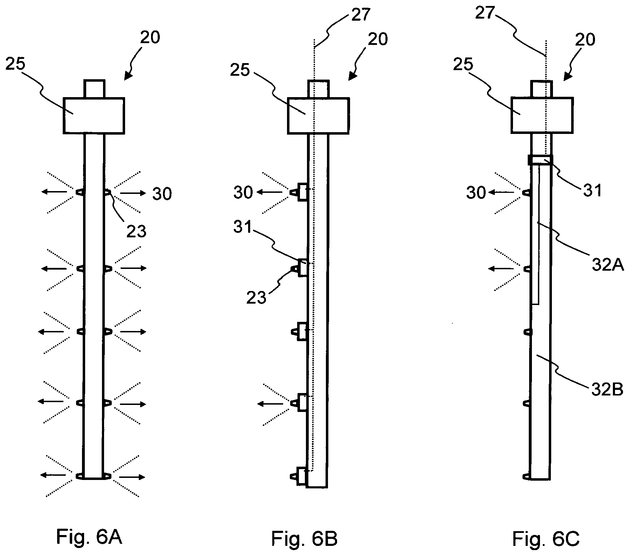

Auch die konkrete Ausbildung der Versorgungsbalken 20 kann variieren. Verschiedene Ausbildungsvarianten sind in den Figuren 6A, 6B und 6C beispielhaft angegeben. Der Versorgungsbalken 20 gemäß Figur 6A umfasst eine Vielzahl von Druckluftauslässen 21, die jeweils paarweise auf einer gemeinsamen Höhe entlang der Längsachse L einander gegenüberliegend am Versorgungsbalken 20 angeordnet sind. Die einzelnen Paarungen sind entlang der Längsachse des Versorgungsbalkens gleichmäßig zueinander beabstandet. Beim in Figur 6A gezeigten Ausführungsbeispiel erfolgt der Austritt der in den Versorgungsbalken 20 eingeleiteten Druckluft zugleich über alle Druckluftauslässe 23. Alternativ hierzu ist es möglich, wie beispielsweise im Ausführungsbeispiel gemäß Figur 6B angegeben, eine individuelle Ansteuerung der einzelnen Druckluftauslässe 23 zu ermöglichen. Hierzu sind beim Ausführungsbeispiel gemäß Figur 6B den Druckluftauslässen 21 jeweils Ventile 31 vorgeordnet, über die die Druckluftverbindung vom Versorgungsbalken 20 zum Druckluftausschluss 21 hin unterbrochen werden kann. Die Ventile 31 sind über die Steuereinleitung 21, beispielsweise einem CAN-Bus, mit der in Figur 2 gezeigten Steuereinheit verbunden. Bei diesem Ausführungsbeispiel ist es somit möglich, jeden der am Versorgungsbalken 20 vorhandenen Druckluftauslässe 23 individuell anzusteuern, so das beispielsweise zwei der insgesamt fünf vorhandenen Druckluftauslässe geöffnet und die übrigen Druckluftausschlüsse geschlossen werden können, wie in Figur 6B beispielhaft angegeben. Das Ausführungsbeispiel gemäß Figur 6C schließlich verfolgt einen ähnlichen Ansatz, wobei hier lediglich ein zentrales Ventil 31 vorhanden ist. Über dieses zentrale Ventil 31 kann eine Druckluftverbindung zu einem ersten Versorgungsraum 32A und/oder einem zweiten Versorgungsraum 32B geschaltet werden oder zu beiden Gruppierungen gleichzeitig unterbrochen werden. Über den Versorgungsraum 32A werden die beiden oberen Druckluftauslässe 23 versorgt, wohingegen die drei unteren Druckluftauslässe 23 über den Versorgungsraum 32B mit der Druckluftversorgung in Verbindung stehen. Mit nur einem Ventil 31 ist somit eine gruppierte Steuerung der vorhandenen Druckluftauslässe möglich.

Figur 7 betrifft eine Querschnittsansicht auf eine Luftvorwärmeinrichtung 19. Bei der in Fig. 7 gezeigten Anordnung der beiden Rohrbündel 16 innerhalb des Gehäuses 18 folgt in Durchströmungsrichtung gesehen ein Rohrbündel 16 auf den Versorgungsbalken 20 mit auf der gezeigten Höhen einer Auslassdüse 23 auf ein Rohrbündel 16. Wird nun der Versorgungsbalken 20 um seine Rotationsachse R gedreht, ist die Auslassdüse zu erheblichen Anteilen direkt auf die Innenwand des Gehäuses 18 gerichtet. Dann tritt kein Reinigungseffekt auf. Diese Bereiche sind in Fig. 7 schraffiert angegeben und mit B bezeichnet. Im vorliegenden Ausführungsbeispiel ist daher eine Segmentsteuerung in Form von zwei Segmentscheiben S vorgesehen, die sich über die Bereich B erstrecken und dann, wenn die Auslassdüse 23 in einen der Bereiche B gedreht ist, die Druckluftversorgung über den Versorgungsbalken zu der Auslassdüse 23 unterbinden. Die Segmentscheiben sind somit derart ausgebildet, dass sie eine Druckluftpassage zur Auslassdüse 23 nur dann ermöglichen, wenn die Auslassdüse 23 in Richtung auf eines der Rohrbündel 16 gedreht ist. Alternativ zu dieser Lösung können auch beispielsweise mechanisch gesteuerte Ventile, insbesondere Ventilschieber genutzt werden und/oder eine Steuerkulisse oder ähnliches eingesetzt werden. Darüber hinaus umfasst die Erfindung auch Ausführungsformen, bei denen die Regeleinheit 26 den Betrieb bzw. die Druckluftversorgung der Auslassdüse 23 in Abhängigkeit von der Relativlage der Auslassdüse 23 bzw. des Versorgungsbalkens 20 steuert. Hierzu kann ein Lagesensor 35C, wie beispielsweise im vorliegenden Ausführungsbeispiel ein Drehwinkelsensor 35 C, vorgesehen sein, über den die Drehlage des Versorgungsbalkens 20 und somit auch der Auslassdüse 23 ermittelt und von der Regeleinheit 26 somit bei der Steuerung der Segmentsteuerung berücksichtigt werden kann. Dieses Gesamtpaket ermöglicht somit einen besonders effizienten und zuverlässigen Betrieb. Einerseits ist durch die lageabhängige Steuerung der Druckluftreinigungseinrichtung 19 gewährleistet, dass Druckluft nur dann in den Wärmetauscherinnenraum ausgeblasen wird, wenn der aus der Auslassdüse 23 austretende Luftstrahl (in Fig. 7 durch den gestrichelten Pfeil veranschaulicht) auch auf ein Wärmetauscherrohr 15 trifft und damit einen Reinigungseffekt auslöst. Andererseits kompensiert die Regeleinheit diesen intervallartigen Betrieb der Druckluftreinigungseinrichtung 19 zum Warmluftauslass 12 hin, so dass bei der Feuerung der Müllverbrennungsanlage, wie in Fig. 1 schematisch gezeigt, losgelöst vom Betriebszustand der Druckluftreinigungseinrichtung 19 ein im Wesentlichen konstante Druckluftversorgung erfolgt.

## Patentansprüche

1. Luftvorwärmeinrichtung (9), insbesondere für eine Müllverbrennungsanlage (1), mit
- einem Kaltlufteinlass (10),
- einem Warmluftauslass (12) und
- einem einen Wärmetauscherraum (11) umgebenden Gehäuse (18), durch das die zu erwärmende Luft geführt wird, wobei im Wärmetauscherraum (11) ein Rohrbündel (16) mit einer Vielzahl von Wärmetauscherrohren (15) angeordnet ist, die über einen Eingangssammler (14) kommend bis hin zu einem Ausgangssammler (17) von einem Wärme abgebenden Medium, insbesondere Dampf, durchströmt werden,
wobei zur Abreinigung von an den Wärmetauscherrohren (15) anhaftenden Verunreinigungen im Betrieb der Luftvorwärmeinrichtung (9) eine Druckluftreinigungseinrichtung (19) angeordnet ist, wobei die Druckluftreinigungseinrichtung (19) einen Druckluftanschluss (21) für den Anschluss an eine Druckluftversorgung (22), einen sich in den Wärmetauscherraum (11) erstreckenden Versorgungsbalken (20) und wenigstens einen am Versorgungsbalken (20) angeordneten Druckluftauslass (23) innerhalb des Wärmetauscherraums (11) aufweist, und
wobei eine Regeleinheit (26) vorhanden ist, die derart ausgebildet ist, dass sie eine Zufuhr der zu erwärmenden Luft der Luftvorwärmeinrichtung in Abhängigkeit vom Betrieb der Druckluftreinigungseinrichtung (19) regelt, **dadurch gekennzeichnet, dass** diese Regelung derart erfolgt, dass die Summe der Volumenströme der der Luftvorwärmeeinrichtung (9) über den Kaltlufteinlass (10) zugeführten zu erwärmenden Luft und der über die Druckluftreinigungseinrichtung (19) in den Wärmetauscherraum (11) ausgeblasenen Luft zumindest im Wesentlichen konstant ist.

2. Luftvorwärmeinrichtung (9) gemäß Anspruch 1,
**dadurch gekennzeichnet,**
**dass** über die Länge des Versorgungsbalkens (20) verteilt eine Vielzahl von Druckluftauslässen (23), insbesondere Lavaldüsen, angeordnet ist, wobei insbesondere sämtliche Druckluftauslässe des Versorgungsbalkens (20) Lavaldüsen aufweisen.

3. Luftvorwärmeinrichtung (9) gemäß einem der vorhergehenden Ansprüche,
**dadurch gekennzeichnet,**
**dass** der wenigstens eine Druckluftauslass (23) in Richtung wenigstens eines Wärmetauscherrohres (15) ausgerichtet am Versorgungsbalken (20) angeordnet ist.

4. Luftvorwärmeinrichtung (9) gemäß einem der vorhergehenden Ansprüche,
**dadurch gekennzeichnet,**
**dass** der Versorgungsbalken (20) an eine Antriebseinrichtung (25) angeschlossen ist und
a) um seine Längsachse (L), insbesondere wenigstens in einem Bereich von 90 °, besonders in einem Bereich von wenigstens 180 ° und ganz besonders frei rotierbar ist, wobei insbesondere eine Rotationsebene des Versorgungsbalkens (20) parallel zu einer Anordnungsebene der Wärmetauscherrohre (15) liegt und/oder
b) entlang seiner Längsachse (L) verschiebbar ist und/oder
c) um eine senkrecht zu seiner Längsachse (L) verlaufende Schwenkachse (R) schwenkbar ist.

5. Luftvorwärmeinrichtung (9) gemäß Anspruch 4,
**dadurch gekennzeichnet,**
**dass** im Fall des bewegbaren Versorgungsbalkens (20) eine Steuerung vorhanden ist, die den Betrieb des Versorgungsbalkens in Abhängigkeit von seiner aktuellen Relativlage zu den Wärmetauscherrohren (15) steuert, insbesondere umfassend einen Lagesensor, besonders einen Winkel- oder Wegmesssensor, und/oder eine mechanisch wirkende Steuereinrichtung, insbesondere umfassend eine Segmentscheibe und/oder eine Steuerkulisse.

6. Luftvorwärmeinrichtung (9) gemäß einem der vorhergehenden Ansprüche,
**dadurch gekennzeichnet,**
**dass** die Wärmetauscherrohre (15) mit ihren Längsachsen (L) parallel zueinander und gruppiert in mehrere zueinander beabstandeten Anordnungsebenen (E1, E2) angeordnet sind, und dass der Versorgungsbalken (20) in einem Zwischenraum zwischen den Anordnungsebenen (E1, E2) angeordnet ist, insbesondere derart, dass er bei einer Projektion in eine Anordnungsebene (E1, E2) mit seiner Längsachse (L) senkrecht zu den Längsachsen (L) der Wärmetauscherrohre (15) angeordnet ist.

7. Luftvorwärmeinrichtung (9) gemäß einem der vorhergehenden Ansprüche,
**dadurch gekennzeichnet,**
**dass** der Versorgungsbalken (20) mit seiner Längsachse senkrecht zur Richtung der Hauptdurchströmungsrichtung der Luft durch den Wärmetauscherraum (11) verläuft.

8. Luftvorwärmeinrichtung (9) gemäß einem der vorhergehenden Ansprüche,
**dadurch gekennzeichnet,**
**dass** am Versorgungsbalken (20) eine Mehrzahl von Druckluftauslässen (23) angeordnet ist, die derart zueinander versetzt am Versorgungsbalken (20) positioniert sind, dass sie in Längsrichtung des Versorgungsbalkens (20) gesehen auf Höhe eines Zwischenraums zwischen zwei Rohrlagen (E1, E2) am Versorgungsbalken (20) sitzen.

9. Luftvorwärmeinrichtung (9) gemäß einem der vorhergehenden Ansprüche,
**dadurch gekennzeichnet,**
**dass** wenigstens zwei Versorgungsbalken (20) vorhanden sind, die über ein Leitungssystem an eine gemeinsame Druckluftversorgung (22) angeschlossen sind.

10. Luftvorwärmeinrichtung (9) gemäß einem der vorhergehenden Ansprüche,
**dadurch gekennzeichnet,**
**dass** die Regeleinheit (26) eine Steuerung umfasst, die derart ausgebildet ist, dass sie den Betrieb des wenigstens einen Versorgungsbalkens (20) derart steuert, dass
a) wenigstens zwei Versorgungsbalken (20) vorhanden sind, die getrennt voneinander über die eine Steuereinheit (26) gesteuert werden und/oder
b) der Betrieb des wenigstens einen Vorsorgungsbalkens (20) kontinuierlich oder intervallartig, insbesondere in Abhängigkeit wenigstens eines weiteren Betriebsparameters, wie beispielsweise dem Druckabfall zwischen dem Kaltlufteinlass (10) und dem Warmluftauslass (13), und/oder
c) pro Versorgungsbalken (20) wenigstens zwei Druckluftauslässe (23) und/oder Druckluftauslassgruppen vorhanden sind, die über von der Steuereinheit (26) angesteuert Ventile (31), insbesondere unabhängig voneinander, schaltbar sind.

11. Luftvorwärmeinrichtung (9) gemäß einem der vorhergehenden Ansprüche,
**dadurch gekennzeichnet,**
**dass** die Druckluftauslässe (23) derart an dem wenigstens einen Versorgungsbalken (20) angeordnet und ausgebildet sind, dass die Druckluft in einem Winkel von maximal 80°, insbesondere maximal 70° und ganz besonders maximal 65° auf eine Anordnungsebene (E1, E2) der Wärmetauscherrohre (15) trifft.

12. Müllverbrennungsanlage (1) umfassend
a) einen Müllbunker (2) und eine Materialzuführung (4) vom Müllbunker (2) zu einer Verfeuerungsstelle (4) (Feuerung);
b) eine Verbrennungsluftversorgung für die Verfeuerungsstelle (4) (Feuerung), wobei die Verbrennungsluftversorgung derart ausgebildet ist, dass Luft aus dem Müllbunker (2) über eine Luftvorwärmeinrichtung (9) der Verfeuerungsstelle (4) (Feuerung) zugeführt wird, **dadurch gekennzeichnet,**
**dass** die Luftvorwärmeinrichtung (9) gemäß einem der Ansprüche 1 bis 11 ausgebildet ist.

13. Verfahren zum Reinigen einer Luftvorwärmeinrichtung (9) gemäß einem der Ansprüche 1 bis 11, umfassend zum Abreinigen von an den Wärmetauscherrohren (15) anhaftenden Verunreinigungen im Betrieb der Luftvorwärmeinrichtung (9) die Schritte:
- Ausblasen einer Druckluft aus einem Versorgungsbalken (20) und
- Regeln der Zufuhr der zu erwärmenden Luft in Abhängigkeit vom Betriebszustand des Versorgungsbalkens (20).

14. Verfahren gemäß Anspruch 13, umfassend wenigstens eines der folgenden Schritte:
a) Bewegen, insbesondere Rotieren oder Verschieben des Versorgungsbalkens (20) und/oder
b) An- und Abschalten des Ausblasens der Druckluft und/oder Verändern des Ausblasdrucks, insbesondere in Abhängigkeit von einer Drehposition des Versorgungsbalkens;
c) Senken der Zufuhr der zu erwärmenden Luft bei einem Anschalten und/oder Erhöhen des Volumenstroms der Luft durch den wenigstens einen Druckluftauslass der Druckluftreinigungseinrichtung (19) und/oder Erhöhen der Zufuhr der zu erwärmenden Luft bei einem Abschalten und/oder Senken des Volumenstroms der Luft durch den wenigstens einen Druckluftauslass (23) der Druckluftreinigungseinrichtung (19); und/oder
d) Konstanthalten eines Feuerraumdrucks durch Variieren der Zufuhr der zu erwärmenden Luft bei einer Änderung des Betriebszustandes der Druckluftreinigungseinrichtung (19).

15. Verfahren zum Betrieb einer Müllverbrennungsanlage (1) gemäß Anspruch 12 unter Anwendung eines Verfahrens der Ansprüche 13 oder 14.

## Claims

1. An air preheating device (9), in particular for a waste incineration plant (1), having
- a cold air inlet (10),
- a warm air outlet (12), and
- a housing (18) which surrounds a heat exchanger space (11) and through which the air to be heated is guided, a tube bundle (16) with a plurality of heat exchanger tubes (15) being arranged in the heat exchanger space (11), through which heat exchanger tubes (15) a heat-emitting medium, in particular steam, flows from an inlet header (14) to an outlet header (17),
wherein a compressed air cleaning device (19) is arranged for cleaning off impurities adhering to the heat exchanger tubes (15) during operation of the air preheating device (9), the compressed air cleaning device (19) having a compressed air connection (21) for connection to a compressed air supply (22), a supply bar (20) extending into the heat exchanger space (11) and at least one compressed air outlet (23) arranged on the supply bar (20) within the heat exchanger chamber (11), and
wherein a control unit (26) is provided which is configured such that it controls a supply of the air to be heated to the air preheating device depending on the operation of the compressed air cleaning device (19), **characterized in that** this control is effected in such a way that the sum of the volume flows of the air to be heated which is supplied to the air preheating device (9) via the cold air inlet (10) and of the air which is blown out into the heat exchanger space (11) via the compressed air cleaning device (19) is at least essentially constant.

2. The air preheating device (9) according to claim 1,
**characterized in that**
a plurality of compressed air outlets (23), in particular Laval nozzles, are distributed over the length of the supply bar (20), wherein in particular all compressed air outlets of the supply bar (20) have Laval nozzles.

3. The air preheating device (9) according to any one of the preceding claims,
**characterized in that**
the at least one compressed air outlet (23) is arranged on the supply bar (20) such that it is oriented toward at least one heat exchanger tube (15).

4. The air preheating device (9) according to any one of the preceding claims,
**characterized in that**
the supply bar (20) is connected to a drive device (25) and
a) is rotatable about its longitudinal axis (L), in particular at least in a range of 90°, more particularly in a range of at least 180°, and most particularly is freely rotatable, wherein in particular a plane of rotation of the supply bar (20) is parallel to an arrangement plane of the heat exchanger tubes (15), and/or
b) is displaceable along its longitudinal axis (L), and/or
c) is pivotable about a pivot axis (R) extending perpendicular to its longitudinal axis (L).

5. The air preheating device (9) according to claim 4,
**characterized in that**
in the case of the movable supply bar (20), a control system is provided which controls operation of the supply bar depending on its current position relative to the heat exchanger tubes (15), in particular comprising a position sensor, in particular an angle or displacement sensor, and/or a mechanically acting control device, in particular comprising a segment disc and/or a control gate.

6. The air preheating device (9) according to any one of the preceding claims,
**characterized in that**
the heat exchanger tubes (15) are arranged with their longitudinal axes (L) parallel to each other and are grouped in several arrangement planes (E1, E2) spaced apart from each other, and that the supply bar (20) is arranged in an intermediate space between the arrangement planes (E1, E2), in particular such that, when projected into an arrangement plane (E1, E2), it is arranged with its longitudinal axis (L) perpendicular to the longitudinal axes (L) of the heat exchanger tubes (15).

7. The air preheating device (9) according to any one of the preceding claims,
**characterized in that**
the supply bar (20) extends with its longitudinal axis perpendicular to the direction of the main air flow direction of the air through the heat exchanger space (11).

8. The air preheating device (9) according to any one of the preceding claims,
**characterized in that**
a plurality of compressed air outlets (23) are arranged on the supply bar (20), which outlets are positioned on the supply bar (20) offset with respect to one another such that, as seen in the longitudinal direction of the supply bar (20), they are positioned on the supply bar (20) at the level of an intermediate space between two tube layers (E1, E2).

9. The air preheating device (9) according to any one of the preceding claims,
**characterized in that**
at least two supply bars (20) are provided, which are connected to a common compressed air supply (22) via a line system.

10. The air preheating device (9) according to any one of the preceding claims,
**characterized in that**
the control unit (26) comprises a control system configured to control operation of the at least one supply bar (20) such that
a) at least two supply bars (20) are provided which are controlled separately from one another via said one control unit (26), and/or
b) the at least one supply bar (20) is operated continuously or in intervals, in particular depending on at least one further operating parameter, such as, for example, the pressure drop between the cold air inlet (10) and the warm air outlet (13), and/or
c) at least two compressed air outlets (23) and/or compressed air outlet groups are provided per supply bar (20), which can be switched via valves (31) driven by the control unit (26), in particular independently of one another.

11. The air preheating device (9) according to any one of the preceding claims,
**characterized in that**
the compressed air outlets (23) are arranged on the at least one supply bar (20) and configured such that the compressed air meets an arrangement plane (E1, E2) of the heat exchanger tubes (15) at an angle of at most 80°, in particular at most 70° and more particularly at most 65°.

12. A waste incineration plant (1), comprising
a) a waste bunker (2) and a material feed (4) from the waste bunker (2) to an incineration point (4) (furnace);
b) an incineration air supply for the incineration point (4) (furnace), the incineration air supply being configured such that air is supplied from the waste bunker (2) via an air preheating device (9) to the incineration point (4) (furnace),
**characterized in that**
the air preheating device (9) is configured according to any one of claims 1 to 11.

13. A method for cleaning an air preheating device (9) according to any one of claims 1 to 11, comprising, for cleaning off impurities adhering to the heat exchanger tubes (15) during operation of the air preheating device (9), the steps of:
- blowing out compressed air from a supply bar (20); and
- regulating the supply of the air to be heated depending on the operating state of the supply bar (20).

14. The method according to claim 13, comprising at least one of the following steps:
a) moving, in particular rotating or displacing, the supply bar (20); and/or
b) switching on and off the blowing out of the compressed air, and/or changing the blow-out pressure, in particular depending on a rotational position of the supply bar;
c) decreasing the supply of the air to be heated when switching on and/or increasing the volume flow of the air through the at least one compressed air outlet of the compressed air cleaning device (19), and/or increasing the supply of the air to be heated when switching off and/or decreasing the volume flow of the air through the at least one compressed air outlet (23) of the compressed air cleaning device (19); and/or
d) keeping an incineration chamber pressure constant by varying the supply of the air to be heated upon a change of the operating state of the compressed air cleaning device (19).

15. A method for operating a waste incineration plant (1) according to claim 12 using a method according to claims 13 or 14.

## Revendications

1. Dispositif (9) de préchauffage d'air, en particulier pour une installation (1) d'incinération de déchets, ayant
- une entrée (10) d'air froid,
- une entrée (12) d'air chaud, et
- un carter (18) qui entoure un espace (11) d'échange thermique et à travers lequel est guidé l'air à chauffer, un faisceau de tubes (16) avec une pluralité de tubes échangeurs de chaleur (15) étant disposé dans l'espace (11) d'échange thermique, tubes échangeurs de chaleur (15) dans lesquels un milieu émettant de la chaleur, en particulier de la vapeur, circule d'un collecteur d'entrée (14) à un collecteur de sortie (17),
dans lequel un dispositif (19) de nettoyage par air comprimé est prévu pour enlever les impuretés adhérant aux tubes échangeurs de chaleur (15) pendant le fonctionnement du dispositif (9) de préchauffage d'air, le dispositif (19) de nettoyage par air comprimé ayant un raccord (21) à air comprimé pour un raccordement avec une alimentation (22) en air comprimé, une tige d'alimentation (20) se prolongeant jusque dans l'espace (11) d'échange thermique et ayant au moins une sortie (23) d'air comprimé disposée sur la tige d'alimentation (20) à l'intérieur de la chambre (11) d'échange thermique, et
dans lequel est prévue une unité de commande (26) qui est configurée de façon à contrôler une alimentation de l'air à chauffer pour le dispositif de préchauffage de l'air qui dépend du fonctionnement du dispositif (19) de nettoyage par air comprimé, ***caractérisé en ce que*** ce contrôle est effectué d'une façon telle que la somme des débits volumétriques de l'air à chauffer qui est fourni au dispositif (9) de préchauffage de l'air via l'entrée d'air froid (10) et de l'air qui est expulsé dans l'espace (11) d'échange thermique via le dispositif (19) de nettoyage par air comprimé soit sensiblement constante.

2. Dispositif (9) de préchauffage d'air selon la revendication 1,
***caractérisé en ce que***
une pluralité de sorties (23) d'air comprimé, en particulier de buses à effet Laval, sont réparties sur la longueur de la tige d'alimentation (20), en particulier toutes les sorties d'air comprimé de la tige d'alimentation (20) comportent des buses à effet Laval.

3. Dispositif (9) de préchauffage d'air selon l'une quelconque des revendications précédentes,
***caractérisé en ce que***
ladite au moins une sortie (23) d'air comprimé est disposée sur la tige d'alimentation (20) de telle sorte qu'elle soit orientée vers au moins un tube échangeur de chaleur (15).

4. Dispositif (9) de préchauffage d'air selon l'une quelconque des revendications précédentes,
***caractérisé en ce que***
la tige d'alimentation (20) est reliée à un dispositif d'entraînement (25) et
a) est rotative autour de son axe longitudinal (L), en particulier au moins dans une plage de 90°, plus particulièrement dans une plage d'au moins 180°, et plus particulièrement est librement rotative, en particulier un plan de rotation de la tige d'alimentation (20) étant parallèle à un plan d'agencement des tubes échangeurs de chaleur (15), et/ou
b) est déplaçable le long de son axe longitudinal (L), et/ou
c) peut pivoter autour d'un axe de pivot (R) s'étendant perpendiculairement à son axe longitudinal (L).

5. Dispositif (9) de préchauffage d'air selon la revendication 4,
***caractérisé en ce que***
dans le cas de la tige d'alimentation mobile (20), un système de commande est prévu, qui commande le fonctionnement de la tige d'alimentation en fonction de sa position actuelle vis-à-vis des tubes échangeurs de chaleur (15), comprenant en particulier un détecteur de position, en particulier un détecteur d'angle ou de déplacement, et/ou un dispositif de commande agissant mécaniquement, en particulier comprenant un disque segmenté et/ou une coulisse de commande.

6. Dispositif (9) de préchauffage d'air selon l'une quelconque des revendications précédentes,
***caractérisé en ce que***
les tubes échangeurs de chaleur (15) sont disposés avec leurs axes longitudinaux (L) parallèles les uns avec les autres et sont groupés selon plusieurs plans d'agencement (E1, E2) à distance les uns des autres, et ***en ce que*** la tige d'alimentation (20) est disposée dans un espace intermédiaire entre les plans d'agencement (E1, E2), en particulier de façon que, lorsqu'elle est projetée dans un plan d'agencement (E1, E2), elle soit disposée avec son axe longitudinal (L) perpendiculaire aux axes longitudinaux (L) des tubes échangeurs de chaleur (15).

7. Dispositif (9) de préchauffage d'air selon l'une quelconque des revendications précédentes,
***caractérisé en ce que***
la tige d'alimentation (20) s'étend avec son axe longitudinal perpendiculaire à la direction du flux d'air principal à travers l'espace (11) d'échange thermique.

8. Dispositif (9) de préchauffage d'air selon l'une quelconque des revendications précédentes,
***caractérisé en ce que***
une pluralité de sorties (23) d'air comprimé sont disposées sur la tige d'alimentation (20), lesdites sorties étant positionnées sur la tige d'alimentation (20) de manière décalée les unes par rapport aux autres de telle sorte, lorsqu'elles sont vues dans la direction longitudinale de la tige d'alimentation (20), elles soient positionnées sur la tige d'alimentation (20) au niveau d'un espace intermédiaire entre deux couches (E1, E2) de tubes.

9. Dispositif (9) de préchauffage d'air selon l'une quelconque des revendications précédentes,
***caractérisé en ce que***
au moins deux tiges d'alimentation (20) sont prévues, qui sont reliées à une alimentation commune (22) en air comprimé via un système de canalisations.

10. Dispositif (9) de préchauffage d'air selon l'une quelconque des revendications précédentes,
***caractérisé en ce que***
l'unité de commande (26) comprend un système de commande configuré pour commander le fonctionnement de ladite au moins une tige d'alimentation (20) de telle sorte que
a) au moins deux tiges d'alimentation (20) sont prévues, qui sont commandées séparément l'une de l'autre par l'intermédiaire de ladite au moins une unité de commande (26), et/ou
b) ladite au moins une tige d'alimentation (20) fonctionne en continu ou de manière intermittente, en particulier en fonction d'au moins un autre paramètre de fonctionnement tel que, par exemple, la chute de pression entre l'entrée d'air froid (10) et la sortie d'air chaud (13), et/ou
c) au moins deux sorties (23) d'air comprimé et/ou groupes de sorties d'air comprimé sont prévu(e)s par tige d'alimentation (20), qui peuvent être commuté(e)s au moyen de valves (31) enclenchées par l'unité de commande (26), en particulier indépendamment entre elles.

11. Dispositif (9) de préchauffage d'air selon l'une quelconque des revendications précédentes,
***caractérisé en ce que***
les sorties (23) d'air comprimé sont disposées sur ladite au moins une tige d'alimentation (20) et configurées de telle sorte que l'air comprimé rencontre un plan d'agencement (E1, E2) des tubes échangeurs de chaleur (15) selon un angle d'au plus 80°, en particulier d'au plus 70°, et de manière encore plus spécifique d'au plus 65°.

12. Installation (1) d'incinération de déchets comprenant
a) un conteneur (2) de stockage des déchets et une alimentation (4) en matières allant du conteneur (2) à déchets à un point d'incinération (4) (four) ;
b) une alimentation en air destiné l'incinération pour le point (4) d'incinération (four), l'alimentation en air destiné à l'incinération étant configurée de telle sorte que l'air soit alimenté depuis le conteneur (2) à déchets par l'intermédiaire d'un dispositif (9) de préchauffage d'air jusqu'au point d'incinération (4) (four),
***caractérisé en ce que***
le dispositif (9) de préchauffage d'air est configuré selon l'une quelconque des revendications 1 à 11.

13. Procédé de nettoyage d'un dispositif (9) de préchauffage d'air selon l'une quelconque des revendications 1 à 11, comprenant, pour enlever les impuretés adhérant aux tubes échangeurs de chaleur (15) pendant le fonctionnement du dispositif (9) de préchauffage d'air, les étapes consistant à :
- expulser de l'air comprimé d'une tige d'alimentation (20) ; et
- réguler l'alimentation de l'air à chauffer en fonction de l'état de fonctionnement de la tige d'alimentation (20).

14. Procédé selon la revendication 13, comprenant au moins l'une des étapes suivantes :
a) motion, en particulier rotation ou déplacement, de la tige d'alimentation (20) ; et/ou
b) mise en marche et arrêt de l'expulsion de l'air comprimé, et/ou modification de la pression d'expulsion, en particulier en fonction d'une position en rotation de la tige d'alimentation ;
c) diminution de l'alimentation de l'air à chauffer lorsqu'on met en marche et/ou lorsqu'on augmente le débit volumétrique de l'air dans ladite au moins une sortie d'air comprimé du dispositif (19) de nettoyage par air comprimé, et/ou augmentation de l'alimentation de l'air à chauffer lorsqu'on arrête et/ou qu'on diminue le débit volumétrique de l'air dans ladite au moins une sortie (23) d'air comprimé du dispositif (19) de nettoyage par air comprimé ; et/ou
d) maintien constant d'une pression dans la chambre d'incinération en faisant varier l'alimentation de l'air à chauffer au moment d'un changement de l'état de fonctionnement du dispositif (19) de nettoyage par air comprimé.

15. Procédé pour faire fonctionner une installation (1) d'incinération de déchets selon la revendication 12 en utilisant un procédé selon les revendications 13 ou 14.
